# EUROPÄISCHE PATENTANMELDUNG

(11) **EP 3 156 765 A1**
(43) Veröffentlichungstag der Anmeldung: **19.04.2017**
(21) Anmeldenummer: 15190261.6
(22) Anmeldetag: 16.10.2015
(51) Int. Cl.: G01C 21/20, A61H 3/06, G01C 21/36

(54) **WEGELEITUNG VON PERSONEN MIT AKUSTISCHEN SIGNALEN**

(71) Anmelder: Inventio AG, 6052 Hergiswil (CH)
(72) Erfinder: TROESCH, Florian, 8045 Zürich (CH)

(57) **Zusammenfassung**

Zur Wegeleitung einer Person (2) entlang eines Wegs (8) werden hörbare akustische Signale verwendet, die in einem Gebiet (1) angeordnete Signalgeber (4, 4A) erzeugen. Die Person (2) kann sich mit Hilfe dieser akustischen Signale in dem Gebiet (1) orientieren. Bewegt sich die Person (8) entlang des Wegs (8) auf einen Zielort zu, erzeugt der auf dem Weg als nächster angeordnete Signalgeber (4, 4A) ein akustisches Signal, in dessen Richtung die Person (2) dann gehen kann. Ein Signalgeber (4, 4A) erzeugt ein solches akustisches Signal, wenn er einen Steuerbefehl von einem von der Person (2) mitgeführten mobilen Gerät (6) oder einer Steuereinrichtung (17) empfängt.

## Beschreibung

Die hier beschriebene Technologie betrifft allgemein die Wegeleitung einer Person mit eingeschränkter Sehfähigkeit entlang eines Weges von einem Ausgangsort zu einem Zielort. Ausführungsbeispiele der Technologie betreffen insbesondere ein Verfahren und ein System zur Wegeleitung einer Person mit eingeschränkter Sehfähigkeit mit Hilfe von räumlich verteilten Signalgebern.

WO 2010/037839 beschreibt ein Verfahren zur Wegeleitung einer Person in einem Gebäude, in dem an festgelegten Stellen (Türen, Wegen, Abzweigungen, Aufzügen etc.) aktive an ein EDV System angeschlossene oder passive an kein EDV-System angeschlossene Informationspunkte vorhanden sind, wobei jeder Informationspunkt seinen lokalen Positionscode speichert. Die Person kann mittels einer Wegeleitungsanwendung auf ihrem mobilen Gerät ihre Behinderung und einen Zielort eingeben. Kommt die Person auf dem Weg zum Zielort in den Empfangsbereich eines Informationspunktes, empfängt das mobile Gerät den Positionscodes dieses Informationspunktes und es wird Information für die Wegeleitung ermittelt. Die Information für die Wegeleitung wird der Person mittels des mobilen Geräts visuell oder akustisch mitgeteilt.

Obwohl WO 2010/037839 eine Möglichkeit zur Wegeleitung einer Person beschreibt, kann es Situationen geben, in denen die Mitteilung der Wegeleitungsinformation für die Person, insbesondere wenn die Person fast oder ganz blind ist, nicht eindeutig sein kann, weil das Verständnis der Wegeleitungsinformation davon abhängen kann, in welche Richtung die Person und somit das mobile Gerät orientiert sind. Beispielsweise führt eine Anweisung "Geradeaus" in die entgegengesetzte Richtung, wenn sich die Person um 180° dreht. Es besteht daher Bedarf an einer Technologie zur Wegeleitung, die diese Problematik vermeidet.

Ein Aspekt einer solchen Technologie betrifft daher ein Verfahren zur Wegeleitung einer Person in einem Gebiet, in dem eine Vielzahl von Signalgebern an festgelegten Standorten angeordnet ist. Gemäss dem Verfahren wird eine momentane Position eines von der Person mitgeführten mobilen Geräts im Gebiet bestimmt und ein Signalgeber ermittelt, der von der momentanen Position ausgehend als nächstes von der Person erreicht werden soll. An den ermittelten Signalgeber wird ein Steuerbefehl gesendet, wobei der Steuerbefehl den ermittelten Signalgeber veranlasst, ein für die Person wahrnehmbares Signal zu erzeugen.

Ein anderer Aspekt betrifft ein System zur Wegeleitung einer Person in einem Gebiet. Das System umfasst ein mobiles Gerät, das von der Person mitführbar ist, eine Vielzahl von Signalgebern, die an festgelegten Standorten im Gebiet angeordnet ist, und einen Prozessor mit einem im Prozessor ausführbaren Softwareprogram zur Wegeleitung. Im Betrieb bestimmt der Prozessor eine momentane Position des mobilen Geräts im Gebiet, ermittelt er einen Signalgeber, der von der momentanen Position ausgehend als nächstes von der Person erreicht werden soll und sendet einen Steuerbefehl an den ermittelten Signalgeber, wobei der Steuerbefehl den ermittelten Signalgeber veranlasst, ein für die Person wahrnehmbares Signal zu erzeugen.

In einigen der hier beschriebenen Ausführungsbeispiele basiert die Wegeleitung auf hörbaren akustischen Signalen, die die Signalgeber erzeugen und an denen sich die Person orientieren kann. Bewegt sich die Person entlang eines Weges auf einen Zielort zu, erzeugt der auf dem Weg als nächster angeordneter Signalgeber ein akustisches Signal, in dessen Richtung die Person dann gehen kann. Die akustischen Signale werden zeitlich aufeinanderfolgend erzeugt, um die Person von Signalgeber zu Signalgeber entlang des Weges zu leiten. Im Gegensatz zum oben genannten Stand der Technik orientiert sich die Person nicht an Information, die ihr durch ihr mobiles Gerät lokal mitgeteilt wird, sondern mittels an entfernten Orten erzeugten akustischen Signalen. Es ist daher einerlei, wie die Person momentan steht oder das mobile Gerät hält.

Vor allem blinde Personen haben üblicherweise ein überdurchschnittlich gutes Gehör. Bei der Festlegung der Parameter eines akustischen Signals, z. B. Lautstärke, Art (z. B. Dauerton, modulierter oder gepulster Ton), Frequenz und Dauer, kann diese Eigenschaft berücksichtigt werden, um ein akustisches Signal zu wählen, das für blinde Personen gut hörbar ist, für andere Personen jedoch nicht störend oder unangenehm ist. Einer oder mehrere dieser Parameter können optimiert werden, um die Orientierung und/oder Lokalisation zu vereinfachen; höhere Töne sind z. B. besser zu orten als tiefere Töne. In einem Ausführungsbeispiel kann die Person festlegen, wie für sie bestimmte Signale klingen sollen. Eine solche Festlegung kann mit Hilfe einer auf dem mobilen Gerät installierten Softwareanwendung erfolgen. In einem Ausführungsbeispiel kann die Softwareanwendung auf einem Display ein Feld darstellt, das, wenn es die Person berührt, das gewünscht Signal auf dem mobilen Gerät oder einem Signalgeber erklingen lässt. Für den Fall, dass in einem Gebiet mehrere Personen geführt werden und unter Umständen mehrere Signale in etwa zur gleichen Zeit erzeugt werden, hat es die Person dann leichter, das für sie bestimmte Signal von den anderen Signalen zu unterscheiden. In einem Ausführungsbeispiel kann das akustische Signal auch eine Sprachmitteilung sein.

Der Zeitpunkt, zu dem der betreffende Signalgeber das akustische Signal erzeugt, wird aufgrund des momentanen Standorts der Person ermittelt. In einem Ausführungsbeispielen wird der Standort dadurch bestimmt, dass das mobile Gerät der Person die Kennung des an diesem Standort angeordneten Signalgebers empfängt. In einer Datenbank sind die Kennung und der Standort des Signalgebers in einem Datensatz gespeichert, so dass daraus der Standort ermittelt werden kann. Bezogen auf den Weg der Person ist mit dem ermittelten Standort derjenige Signalgeber identifiziert, der als nächster ein akustisches Signal erzeugen soll.

In einem Ausführungsbeispiel wird das Ermitteln des Signalgebers, der von der momentanen Position ausgehend als nächster von der Person erreicht werden soll, von dem mobilen Gerät ausgeführt. In einem Ausführungsbeispiel führt das mobile Gerät auch das Senden des Steuerbefehls an den ermittelten Signalgeber aus. Das mobile Gerät führt somit wesentliche Funktionen der Wegeleitung aus. Diese ermöglicht die Verwendung von relativ einfachen und kostengünstigen Signalgebern, beispielsweise von Bluetooth Beacons.

In einem Ausführungsbeispiel wird die momentane Position durch ein Positionsbestimmungssystem, insbesondere ein globales Positionsbestimmungssystem oder ein Positionsbestimmungssystem für Gebäude bestimmt. Diese Art der Positionsbestimmung nutzt z. B. die in vielen mobilen Geräten (z. B. Smartphones) bereits vorhandene Funktion der Positionsbestimmung via GPS, so dass keine weitere Einrichtung zur Positionsbestimmung erforderlich ist.

In einem Ausführungsbeispiel wird die momentane Position bestimmt, wenn ein erster Signalgeber vom mobilen Gerät Daten empfängt. Empfängt der Signalgeber, der an einem festgelegten Standort angeordnet ist, die Daten, wird die momentane Position mit dem festgelegten Standort des ersten Signalgebers gleichgesetzt. Das mobile Gerät befindet sich dann am oder in der Nähe dieses Signalgebers.

In einem Ausführungsbeispiel wird das Ermitteln des Signalgebers, der von der momentanen Position ausgehend als nächster von der Person erreicht werden soll, von einer Steuereinrichtung ausgeführt. Das Senden des Steuerbefehls an den ermittelten Signalgeber kann dabei von der Steuereinrichtung ausgeführt werden. Der Steuerbefehl kann in einem Ausführungsbeispiel über ein Netzwerk, an das die Signalgeber gekoppelt sind, gesendet werden.

Durch die genannten Möglichkeiten für die Positionsbestimmung ergibt sich eine hohe Flexibilität bezüglich der Implementierung der hier beschriebenen Technologie zur Wegeleitung. Die Funktion der Wegeleitung kann im Wesentlichen durch das mobile Gerät, das mit einfachen Signalgebern kommuniziert, oder durch die Steuereinrichtung, ausgeführt werden. Die Steuereinrichtung kommuniziert dabei mit den Signalgebern, die ihrerseits erkennen, ob das mobile Gerät in ihrer Nähe ist. Für den Zweck der Wegeleitung fungiert das mobile Gerät quasi als Signalgeber, der nur seine ID aussendet.

In einem Ausführungsbeispiel ergibt sich weitere Flexibilität in der Implementierung dadurch, dass der Person an verschiedenen Orten Zielvorschläge gemacht werden können, von denen sie einen auswählen kann. Dabei wird basierend auf der momentanen Position, mindestens ein Zielvorschlag erzeugt, wobei der mindestens eine Zielvorschlag von der momentanen Position ausgehend über einen Weg erreichbar ist. Der Zielvorschlag wird an die Person unter Verwendung des mobilen Geräts übermittelt. Nach Auswahl des Zielorts durch die Person, wird ein Signalgeber, der am Zielort angeordnet ist, ermittelt und der Steuerbefehl wird an den am Zielort angeordneten Signalgeber gesendet, um dort durch den Signalgeber das für die Person wahrnehmbare Signal zu erzeugen.

In einem Ausführungsbeispiel sind die Signalgeber und das mobile Gerät mit Bluetooth Technologie ausgestatten sind und kommunizieren mittels dieser Technologie miteinander. Smartphones sind typischerweise bereits mit Einrichtungen für diese Technologie ausgestattet, so dass keine speziellen mobilen Geräte für die hier beschriebene Wegeleitung benötigt werden. Solche Smartphones können mit Bluetooth fähigen Signalgebers, sogenannten Beacons, kommunizieren.

Die Signalgeber sind in einem Ausführungsbeispiel so angeordnet, dass benachbarte Signalgeber, bzw. deren Standorte ohne ein dazwischenliegendes Hindernis (z. B. Wand, Pfeiler, Tür, Verkaufsstand, etc.) erreicht werden können. Sollte ein Hindernis bestehen, entweder weil eine Vermeidung nicht realisierbar ist oder wegen eines temporären Hindernisses (z. B. Baustelle), kann ein Signalgeber an diesem Hindernis angebracht werden. Dieser Signalgeber kann die Person zum Beispiel auf dieses Hindernis hinweisen. Diese Optionen für die Anordnung der Signalgeber unterstützen die Person, sich entlang ihres Wegs sicher und effizient zu orientieren.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude, in dem sich eine Person entlang eines Weges bewegen kann;
- Fig. 2: eine schematische Darstellung einer beispielhaften Wegeleitung entlang von mehreren Orten;
- Fig. 3: eine schematische Darstellung eines beispielhaften Kommunikationssystems;
- Fig. 4: eine schematische Darstellung eines mobilen Geräts; und
- Fig. 5: eine beispielhafte Darstellung eines Verfahrens zur Wegeleitung einer Person anhand eines schematischen Ablaufdiagramms.

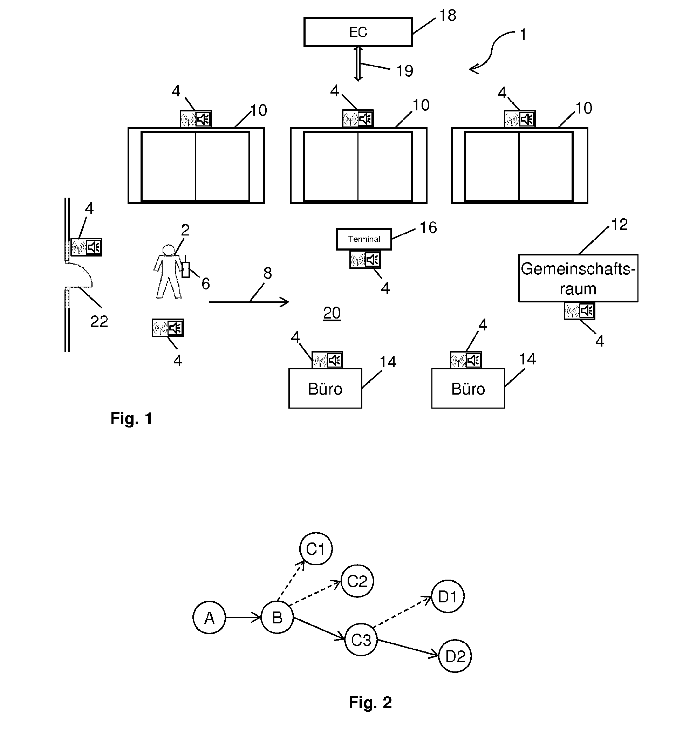

Fig. 1 ist eine schematische Darstellung einer beispielhaften Situation in einem Gebäude 1, in dem sich eine Person 2 mittels einer Wegeleitung entlang eines Weges 8 in Richtung eines Zielorts bewegt. Der Fachmann erkennt, dass die Technologie nicht auf eine Wegeleitung innerhalb des Gebäudes 1 beschränkt ist, sondern auch in anderen Gebieten, z. B. ausserhalb des Gebäudes 1 eingesetzt werden kann, beispielsweise für eine Wegeleitung entlang von Strassen. Das Gebäude 1 (z. B. Wohnhaus, Büro- und Geschäftshaus, Hotel, Sportarena, Flughafengebäude, Fabrikanlage) ist somit als ein Beispiel für ein Gebiet, in dem der Weg verlaufen kann, zu verstehen.

In der in Fig. 1 gezeigten beispielhaften Situation befindet sich die Person 2, die ein mobiles Gerät 6 mit sich führt, auf einem Stockwerk 20 und bewegt sich entlang des Wegs 8. Der Zugang 22 ist beispielsweise eine Gebäudeaussentür, durch die das Gebäude 1, beispielsweise auf Strassenniveau, betreten und verlassen werden kann. Fig. 1 zeigt ausserdem mehrere Büro- oder Geschäftsräume 14, einen Gemeinschaftsraum 12, drei Aufzüge 10, ein Stockwerkterminal 16 und mehrere Signalgeber 4. Eine ebenfalls gezeigte Aufzugsteuerung 18 ist kommunikativ mit den Aufzügen 10 und dem Stockwerkterminal 16 verbunden (angedeutet durch einen Doppelpfeil 19), um die Aufzüge 10 gemäss einem Fahrtwunsch anzusteuern.

Der Weg 8 kann auf unterschiedliche Weise festgelegt sein. Die Person 2 kann z. B. den Wunsch haben, von einem Ausgangsort zu einem (einzigen) Zielort zu gehen, evtl. über ein oder mehrere Zwischenziele oder Orte von Interesse. In einem Ausführungsbeispiel kann die Person 2 bereits am Ausgangsort am mobilen Gerät 6 den gewünschten Zielort eingeben. Der Weg 8 zum Zielort ist somit festgelegt, bevor die Person 2 anfängt, entlang des Wegs 8 zu gehen. In diesem Fall definiert der Weg 8 die Strecke zwischen dem Ausgangsort und dem Zielort. Mit Kenntnis des Ausgangsorts, des Zielorts und dazugehörigem Kartenmaterial (z. B. Gebäudeplan, Stadtplan, etc.) können der Weg 8 und dazugehörige Wegeleitungsinformation ermittelt werden, um die Person 2 sicher und effizient zum Zielort zu leiten. Ausgehend von einem momentanen Standort der Person 2 bzw. eines dort vorhandenen Signalgebers 4 wird der nächste auf dem Weg 8 liegende Signalgeber 4 ermittelt und veranlasst, ein für die Person 2 wahrnehmbares Signal zu erzeugen. In einem Ausführungsbeispiel wird ein hörbares akustisches Signal erzeugt. Dieses Vorgehen wiederholt sich an jedem auf dem Weg 8 liegenden Signalgeber 4 automatisch und ohne weiteres Zutun der Person 2, bis sie ihren Zielort erreicht.

In einem anderen Fall legt die Person 2 keinen Zielort fest. Stattdessen kann sie an einem momentanen Aufenthaltsort einen Zielort wählen. Basierend auf dem momentanen Aufenthaltsort bietet die hier beschriebene Technologie der Person 2 mögliche Zielorte an, von denen die Person 2 einen auswählen kann. In diesem Fall besteht der Weg 8 aus der Strecke vom momentanen Standort zum nächsten Zielort, und die hier beschriebene Technologie führt die Person 2 entlang des Wegs 8 zum nächsten Zielort. Wird dort ein weiterer Zielort ausgewählt, wird ein neuer Weg 8 ermittelt.

Fig. 2 zeigt den genannten Fall, dass die Person 2 keinen Zielort festlegt, beispielhaft in allgemeiner Form: Die Person 2 kann von einem Ort A zu einem Ort B gehen. Dort angekommen, hat die Person 2 die Wahl, zu möglichen und ihr mitgeteilten Orten C1, C2 oder C3 zu gehen. Entscheidet sie sich für den Ort C3 (s. durchgezogenen Pfeil) erzeugt der am Ort C3 angeordnete Signalgeber 4 ein für die Person 2 hörbares akustisches Signal, dem die Person 2 folgen kann. Wenn sie am Ort C3 ankommt, hat die Person 2 die Wahl zu einem Ort D1 oder Ort D2 zu gehen. In Fig. 2 entscheidet sich die Person 2 für den Ort D2 (s. durchgezogenen Pfeil) und der am Ort D2 angeordnete Signalgeber 4 erzeugt ein hörbares akustisches Signal, dem die Person 2 bis zum Ort D2 folgen kann.

Angewandt auf die Situation der Fig. 1 befindet sich die Person 2 vom Zugang 22 (Ort A) kommend im Umfeld des Zugangs 22 (Ort B). Dort (Ort B) hat sie die Wahl, entweder zum Aufzug 10 (Ort C1), Stockwerkterminal 16 (Ort C2) oder Büro 14 (Ort C3) zu gehen. Das mobile Gerät 6 teilt ihr diese Optionen in einem Ausführungsbeispiel hörbar mit. Wählt die Person 2, z. B. durch Spracheingabe, das Büro 14 (Ort C3), erzeugt der dort angeordnete Signalgeber 4 ein hörbares akustisches Signal und die Person 2 bewegt sich in Richtung des akustischen Signals, um zum Büro 14 (Ort C3) zu gelangen. Dort hat die Person 2 die Wahl, entweder zu einem anderen Büro 14 (Ort D1) oder zum Gemeinschaftsraum 12 (Ort D2) zu gehen. Wählt sie den Gemeinschaftsraum 12, erzeugt der dort angeordnete Signalgeber 4 ein hörbares akustisches Signal.

Eine ähnliche Situation kann sich beispielsweise in einem Gebäude 1 mit mehreren nebeneinanderliegenden Büros 14 oder Arbeitsplätzen oder in einem Einkaufszentrum mit nebeneinanderliegenden Geschäften ergeben. Bewegt sich die Person 2 in einer solchen Umgebung kann das mobile Gerät 2 beispielsweise die Namen der in den Büros 14 arbeitenden Personen oder die Namen der Geschäfte anzeigen. Die Person 2 kann z. B. in oder vor einem Büro 14 oder Geschäft wählen, welche Person oder welches Geschäft sie erreichen möchte.

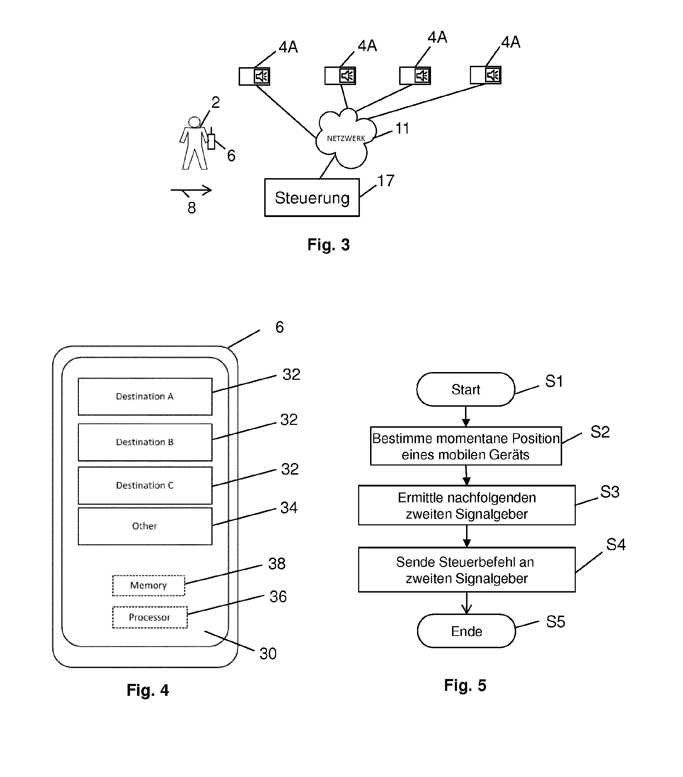

Die Signalgeber 4 sind einzeln ansteuerbar, um die Erzeugung eines Signals zu veranlassen. Um die Ansteuerung zu ermöglichen, kann jeder Signalgeber 4 über eine individuelle Kennung oder Adresse adressierbar sein; beispielsweise adressiert in einem Ausführungsbeispiel das mobile Gerät 6 einen Steuerbefehl an den gewünschten Signalgeber 4. Alternativ dazu kann in einem anderen Ausführungsbeispiel jeder Signalgeber 4 mit einer Steuereinrichtung 17 (s. Fig. 3) vernetzt sein, die die Signalgeber 4 entweder über einzelne Signalleitungen, ein Bussystem oder Netzwerk, ansteuert. Auch bei diesen Alternativen kann die Steuereinrichtung 17 einen Steuerbefehl an einen gewünschten Signalgeber 4 adressieren. In diesen Ausführungsbeispielen kann der Steuerbefehl mit einem Draht gebundenen Signal und/oder einem Funksignal übertragen werden. Der jeweils adressierte Signalgeber 4 erzeugt nach dem Empfang des Steuerbefehls das Signal, während evtl. benachbarte, aber nicht adressierte Signalgeber 4 stumm bleiben. Der Fachmann erkennt, dass auch mehrere Signalgeber 4 angesteuert werden können, um beispielsweise einen Lauflicht ähnlichen Effekt in Richtung des Wegs 8 zu erzeugen.

Erneut bezugnehmend auf Fig. 1, dort sind die Signalgeber 4 an verschiedenen Stellen innerhalb des Gebäudes 1 angeordnet. Sie können beispielsweise an Orten angeordnet sein, die von Personen innerhalb des Gebäudes 1 frequentiert werden können. Im in Fig. 1 gezeigten Ausführungsbeispiel ist jeweils ein Signalgeber 4 an verschiedenen Orten, z. B. den Räumen 12, 14, dem Zugang 22, im Umfeld des Zugangs 22, dem Stockwerkterminal 16 und den Aufzügen 10 angeordnet. Die Signalgeber 4 können allgemein auch in der näheren Umgebung dieser Orte angeordnet sein. Der Fachmann erkennt, dass die Anzahl der Signalgeber 4 und deren Anordnung, einschliesslich eines Abstands zu einem oder mehreren benachbarten Signalgeber 4, beispielsweise abhängig von der Gebäudesituation gewählt werden können. Wie oben erwähnt, können benachbarte Signalgeber 4 so angeordnet werden, dass keine Hindernisse dazwischenliegen. Die Anordnung der Signalgeber 4 kann beispielsweise in einem Gebäudeplan oder, wenn die Wegeleitung in einer Stadt entlang von Strassen erfolgt, einem Stadtplan dokumentiert sein.

In einem Ausführungsbeispiel ist das mobile Gerät 6, das die Person 2 mit sich führt, dazu ausgestaltet, um Daten von einem Signalgeber 4 (beispielsweise dessen Identifikationsnummer oder Kennung) zu empfangen, mittels denen ein momentaner Standort des mobilen Geräts 10 bestimmt werden kann. Das Empfangen erfolgt kontaktlos, beispielsweise durch Scannen eines optischen Codes (z. B. QR Code, Barcode, Farbcode) oder Herstellen einer Funkverbindung basierend auf einer der bekannten Technologien für Nahfeldkommunikation (NFC "near field communication"), Wi-Fi Direct, RFID oder Bluetooth.

In einem anderen Ausführungsbeispiel hat das mobile Gerät 6 eine Einrichtung zur Positionsbestimmung, beispielsweise eine Einrichtung für das globale Positionsbestimmungssystem (GPS). Zur Positionsbestimmung des mobilen Geräts 6 kann ausserdem ein Positionsbestimmungssystem für Gebäude, auch Indoor Positionsbestimmungssystem (IPS) genannt, verwendet werden. Ein solches IPS kann durch entsprechend angeordnete lokale Funkzellen (z. B. WLAN-Knoten) realisiert sein.

In einigen der hier beschriebenen Ausführungsbeispiele erfolgt die Positionsbestimmung mit Hilfe der Signalgeber 4. In diesen Ausführungsbeispielen ist das mobile Gerät 6 ein Bluetooth fähiges Smartphone, und die Signalgeber 4 sind entsprechend dazu ebenfalls Bluetooth fähig. Ein derartiger Signalgeber 4 ist daher im Folgenden als "Beacon" oder als "Bluetooth Beacon" bezeichnet. Die Kommunikation zwischen dem mobilen Gerät 6 (Smartphone) und den Beacons erfolgt somit gemäss dem Bluetooth Standard, z. B. dem Bluetooth Standard 4.0 (Bluetooth Low Energy (BLE)) oder einem anderen Bluetooth Standard. Derartige Beacons sind üblicherweise batteriebetriebene Sender mit geringem Stromverbrauch, die permanent in einem kurzen Intervall von ca. einer Sekunde gemäss einem festgelegten Sendeprotokoll eine eindeutige Identifikationsnummer (Kennung) aussenden. Ein Beacon ist adressierbar, beispielsweise durch seine MAC Adresse (Media Access Control).

Wie erwähnt sendet ein Beacon immer die gleichen Daten, beispielsweise seine Identifikationsnummer (z. B. "ID = 5") aus. Ist das mobile Gerät 6 (bei aktivierter Bluetooth Funktion) in Funkreichweite des Beacons, empfängt das mobile Gerät 6 die ausgesendeten Daten. Der Fachmann erkennt, dass mehrere mobile Geräte in Funkreichweite sein können und dass dann jedes dieser mobilen Geräte die Daten empfangen kann. Mit diesen Daten kann ermittelt werden, dass sich das mobile Gerät 6 momentan beispielsweise in der Nähe des Beacons mit der "ID = 5" befindet. Dem entsprechend werden keine Daten mehr empfangen, wenn das mobile Gerät 6 sich wieder ausserhalb der Funkreichweite befindet. Der Fachmann erkennt, dass ein aus der Bluetooth Technologie bekanntes Pairing beispielsweise wegen der Vielzahl von im Gebäude 1 verteilten Beacons und sich eventuell im Gebäude 1 aufhaltenden (einmaliger) Besucher in einem Ausführungsbeispiel nicht vorgesehen ist. Sollte es jedoch vorgesehen sein, ist hier angenommen, dass ein erster kommunikativer Kontakt (d. h. das Pairing) zwischen dem mobilen Gerät 6 und den Beacons bereits erfolgt ist. Beim Pairing tauschen die Kommunikationspartner Kenndaten aus, so dass sie sich beim nächsten Mal automatisch wiedererkennen.

Die Funktionalität eines Beacons, mit dem mobilen Gerät 6 eine kommunikative Verbindung eingehen zu können, ist in Fig. 1 durch ein Symbol für eine Funkübertragung illustriert. Zusätzlich zu dieser Funktionalität kann der Beacon ein von der Person 2 hörbares akustisches Signal erzeugen. Diese Funktionalität ist in Fig. 1 durch ein Lautsprechersymbol illustriert. Als Beacon mit diesen Funktionalitäten kann beispielsweise ein Enterprise Beacon der Firma Onyx Beacon Ltd., Rumänien, verwendet werden. Ein solcher Beacon hat einen Summer, um ein hörbares akustisches Signal zu erzeugen, und eine Klebeseite, um den Beacon an einem gewünschten Ort zu positionieren.

In einem anderen Ausführungsbeispiel kann ein Lautsprecher oder Summer auch getrennt vom Beacon angeordnet sein. Der Lautsprecher oder der Summer können mit einem Kabel oder kabellos an den Beacon gekoppelt sein. Empfängt der Beacon einen Steuerbefehl vom mobilen Gerät 6, steuert der Beacon den Lautsprecher oder Summer entsprechend dem Steuerbefehl an.

Ein Beacon mit einem Summer, oder Lautsprecher, sendet nicht nur die genannte Identifikationsnummer aus, sondern kann auch einen an ihn adressierten Steuerbefehl empfangen. Dafür hat der Beacon einen elektronischen Schaltkreis zum Empfangen eines entsprechenden Funksignals. Ein Steuerbefehl kann beispielsweise den Beacon dazu veranlassen, den Summer zu aktivieren, um ein akustisches Signal zu erzeugen.

Mit dem Verständnis der beschriebenen Funktion eines Beacons ist ersichtlich, dass auch ein Bluetooth fähiges Smartphone als eine Art Beacon verwendet werden kann, auch wenn es sich dabei nicht um einen stationären Beacon handelt. Das Smartphone sendet dabei in regelmässigen Abständen seine Kennung aus, die dann von einem anderen Bluetooth fähigen Gerät, das sich in Reichweite befindet, empfangen werden kann. Das in Fig. 1 gezeigte Terminal 16 kann in einem Ausführungsbeispiel ein solches Bluetooth fähiges Gerät sein oder enthalten. Ähnlich den verteilten Signalgebern 4 können mehrere derartige Bluetooth fähige Geräte im Gebiet 1 an festgelegten Standorten vorhanden sein, die dann auch im Gebäudeplan dokumentiert sind.

In dem in Fig. 1 gezeigten Ausführungsbeispiel senden die Signalgeber 4 ihre Identifikationsnummern aus, und das mobile Gerät 6 bestimmt aus einer empfangenen Identifikationsnummer die momentane Position und führt daraufhin die Wegeleitung, einschliesslich der Ansteuerung des nächsten Signalgebers 4, aus. In diesem Ausführungsbeispiel kommunizieren die Signalgeber 4 ausschliesslich mit dem mobilen Gerät 6. In einem anderen Ausführungsbeispiel dient das mobile Gerät 6 quasi als mobiler Beacon und wenigstens ein Teil der Wegeleitungsfunktion erfolgt ausserhalb des mobilen Geräts 6. Für dieses Ausführungsbeispiel zeigt Fig. 3 eine schematische Darstellung eines beispielhaften Kommunikationssystems.

Das in Fig. 3 gezeigte Kommunikationssystem umfasst mehrere Signalgeber 4A und die bereits oben genannte Steuereinrichtung 17, die an ein Netzwerk 11 gekoppelt sind. Zusätzlich dazu ist die Person 2 mit ihrem mobilen Gerät 6 gezeigt, die sich entlang des Wegs 8 bewegt und deren mobiles Gerät 6 ebenfalls an das Netzwerk 11 gekoppelt ist. Je nach Ausgestaltung kann das Netzwerk 11 für eine Draht gebundene Kommunikation und/oder eine Funkkommunikation vorgesehen sein und dafür ein Bussystem, ein LAN, ein WLAN, ein Mobilfunknetz und/oder das Internet umfassen. Das Netzwerk 11 kann auch Teil einer IT Infrastruktur für das sogenannte Cloud Computing sein, unter dem man beispielsweise das Speichern von Daten in einem entfernten Rechenzentrum, aber auch das Ausführen von Programmen, die nicht lokal sondern entfernt installiert sind, versteht. Je nach Ausgestaltung kann eine bestimmte Funktionalität im mobilen Gerät 6 installiert sein oder über die "Cloud" zur Verfügen gestellt werden. Die Signalgeber 4A und die Steuereinrichtung 17 sind dementsprechend mittels Leitungen oder Funkverbindungen an das Netzwerk 11 gekoppelt.

Im Unterschied zu den in Fig. 1 gezeigten Signalgebern 4, können die in Fig. 3 gezeigten Signalgeber 4A nicht als Beacon ausgestaltet sein. In dem in Fig. 3 gezeigten Ausführungsbeispiel sind die Signalgeber 4A deshalb nur mit einem Symbol für einen Lautsprecher gezeigt. Die Ermittlung der momentanen Position des mobilen Geräts 6 kann dabei beispielsweise mittels der im mobilen Gerät 6 vorhandenen GPS Funktion oder eines oben genannten Indoor Positioning Systems (IPS) erfolgen. Das mobile Gerät 6 ist dazu eingerichtet, die so ermittelte momentane Funktion zur Steuereinrichtung 17 zu übertragen, beispielsweise mittels des Mobilfunknetzes. Die Steuereinrichtung 17 weiss somit, wo sich das mobile Gerät 6 befindet.

Soll die Ermittlung der momentanen Position dagegen mit Hilfe des Standorts des Signalgebers 4A erfolgen, kann in einem Ausführungsbeispiel der Signalgeber 4A auch mit einem Funkmodul (z. B. als Bluetooth Funkmodul) ausgestaltet sein, das mit dem mobilen Gerät 6 kommuniziert. Sobald es zu einer kommunikativen Verbindung zwischen dem Funkmodul des Signalgebers 4A und dem mobilen Gerät 6 kommt, empfängt der Signalgeber 4A die ID des mobilen Geräts 6 und übermittelt diese in einer Nachricht über das Netzwerk 11 an die Steuereinrichtung 17. Die Steuereinrichtung 17 hat einen Prozessor, in dem ein Softwareprogram zur Wegeleitung ausführbar ist. Die Nachricht kann eine Adresse des übermittelnden Signalgebers 4A enthalten und/oder an einem für den übermittelnden Signalgeber 4A vorgesehenen Signaleingang der Steuereinrichtung 17 eingehen. In der Steuereinrichtung 17 sind die Standorte der einzelnen Signalgeber 4A gespeichert. Mit Kenntnis der Adresse und/oder des Signaleingangs kann die Steuereinrichtung 17 den übermittelnden Signalgeber 4A identifizieren und seinen Standort ermitteln. Die Steuereinrichtung 17 weiss somit, dass sich das mobile Gerät 6 beim übermittelnden Signalgeber 4A befindet.

Als weitere Funktion der Wegeleitung kann die Steuereinrichtung 17 dann den Signalgeber 4A ermittelt, der als nächster auf dem Weg 8 liegt. Die Steuereinrichtung 17 sendet daraufhin einen Steuerbefehl an diesen Signalgeber 4A, entweder an diesen adressiert oder von einem Signalausgang aus, der für diesem Signalgeber 4A festgelegt ist. Als Reaktion auf den Steuerbefehl erzeugt der Signalgeber 4A das Signal.

Aus dem Vorhergehenden erkennt der Fachmann, dass die hier beschriebene Technologie zur Wegeleitung im mobilen Gerät 6 (s. Fig. 1) oder in der Steuereinrichtung (s. Fig. 3) implementiert sein kann. In beiden Ausführungsbeispielen kommt das mobile Gerät 6 zum Einsatz, das abhängig davon, wo die Wegeleitung implementiert sein soll, konfiguriert werden kann.

Fig. 4 illustriert ein Smartphone als ein Beispiel für ein mobiles Gerät 6. Darin sind eine Speichereinrichtung 38 (Memory) und ein Prozessor 36 unter einem Display 30 (Touch Screen) von aussen nicht sichtbar (deswegen gestrichelt angedeutet) angeordnet. Mit Hilfe des User Interfaces kann die Person 2 Einstellungen und gewünschte Funktionen am mobilen Gerät 6 individuell anpassen. Die Bluetooth Funktion kann beispielsweise aktiviert und deaktiviert werden; letzteres beispielsweise zur Wahrung der Privatsphäre, weil ohne Bluetooth Funktion die Bewegungen und Aufenthaltsorte der Person 2 im Gebäude 1 nicht bestimmbar sind. Ausserdem kann eine Softwareanwendung (App) zur Wegeleitung von der Person 2 aktiviert und deaktiviert werden. Bei Bedarf kann die Person 2 die Bluetooth Funktion und die Softwareanwendung aktivieren. Je nach Ausgestaltung kann die Softwareanwendung automatisch aktiviert werden, wenn ein Beacon in der Nähe ist, oder immer aktiv sein, wenn das mobile Gerät 10 eingeschaltet ist.

Das Smartphone als beispielhaftes mobiles Gerät 6 unterstützt die Person 2 bei der Wegeleitung. Da die Person 2 eine Sehschwäche hat oder blind ist und optische Anzeigen auf einem Display 30 des mobilen Geräts 6 von der Person 2 u. U. schlecht oder gar nicht erkannt werden können, kann das Smartphone speziell für solche Einschränkungen ausgestaltet sein. Das Smartphone kann z. B. hardwaremässig und/oder softwaremässig (z. B. mittels einer Softwareanwendung) für eine Spracheingabe und Sprachausgabe ausgestaltet sein, so dass die Person 2 beispielsweise mit Sprachunterstützung durch ein Menü geführt wird und eine gewünschte Auswahl und/oder Eingabe durch von ihr gesprochene Befehle machen kann. Das mobile Gerät 6 kann beispielsweise ein von der Person 2 gesprochenes Ziel erkennen, dieses verarbeiten und Wegeleitungsinformation erzeugen. Zur Veranschaulichung von beispielhaften Auswahlmöglichkeiten zeigt Fig. 4 mehrere Ziele (Destination A, Destination B, Destination C, Other) an, die auf dem Display 30 verschiedenen Zielauswahlfeldern 32, 34 zugeordnet sind. Das mobile Gerät 6 kann diese Ziele der Person 2 mittels Sprache mitteilen.

Mit dem Verständnis der oben beschriebenen prinzipiellen Systemkomponenten (mobiles Gerät 6, Signalgeber 4, Signalgeber 4A) und deren Funktionalitäten, erfolgt im Folgenden eine Beschreibung eines beispielhaften Verfahrens zur Wegeleitung anhand von Fig. 5. In diesem Ausführungsbeispiel ist die Wegeleitung im mobilen Gerät 6 implementiert, das mit den Bluetooth fähigen Signalgebern 4 (Beacons) kommuniziert. Das beispielhafte Verfahren beginnt in einem Schritt S1 und endet in einem Schritt S5.

Das mobile Gerät 6 und die Beacons sind Teil eines Systems, das die Wegeleitung der Person 2 entlang des Wegs 8 unterstützt. In diesem System interagiert das mobile Gerät 6 mit den Beacons, wobei die individuelle Kennung (z. B. "ID=5") eines Beacons vom mobilen Gerät 6 empfangen wird. In einem Schritt S2 kann damit die momentane Position des mobilen Geräts 6 bestimmt werden. Das mobile Gerät 6 (bzw. eine darauf installierte Softwareanwendung zur Wegeleitung (Wegeleitungs-App)) nutzt die empfangene Kennung eines Beacons, um den Standort dieses Beacons und somit auch seines eigenen Standorts zu ermitteln. Die Ermittlung kann entweder lokal durch die Wegeleitungs-App erfolgen oder durch einen durch die Wegeleitungs-App initiierten Zugriff auf eine entfernt angeordnete Datenbank.

Bei der lokalen Ermittlung nutzt die Wegeleitungs-App Gebäudeplaninformation und Datensätze, die im mobilen Gerät 6 in der Speichereinrichtung 38 gespeichert sind. Jeder Datensatz speichert den Standort eines Beacons zusammen mit seiner Kennung. Die Anzahl solcher Datensätze entspricht der Anzahl der Beacons. Die Gebäudeplaninformation kann z. B. bei der Installation der Wegeleitungs-App auf dem mobilen Gerät 6 gespeichert werden, so dass sie bereits vorliegt, wenn die Person 2 den Zielort eingibt. Empfängt die Wegeleitungs-App die Kennung des Beacons, kann damit durch sie der Standort dieses Beacons im Gebäude 1 ermittelt werden (z. B. "ID = 5" am Zugang 22).

Bei der Ermittlung durch einen Zugriff auf eine entfernt angeordnete Datenbank initiiert die Wegeleitungs-App mittels einer Funkverbindung ein Zugreifen auf eine Datenbank. In dieser Datenbank ist die Kennung mit Daten zu einem Standort, an dem dieser Beacon angeordnet ist, verknüpft. Die Datenbank kann in einem Speichersystem eines Gebäudemanagementsystems, einem Speichersystem eines Dienstleister oder einem Speichersystem der Aufzugsteuerung 18 vorhanden sein. Beim Zugriff auf die Datenbank kann auch ein Identifikationsparameter (z. B. Telefonnummer und/oder Geräte ID Code (Media-Access-Control (MAC) Adresse)) des auf die Datenbankzugreifenden mobilen Geräts 6 übertragen werden.

Der Fachmann erkennt, dass in einem anderen Ausführungsbeispiel die momentane Position des mobilen Geräts 6 auch mit Hilfe einem der oben genannten Systeme GPS und IPS bestimmt werden kann.

Unabhängig davon, wie und wo die Ermittlung stattfindet, setzt die Wegeleitungs-App den ermittelten Standort in Beziehung zum Weg 8. In einem Ausführungsbeispiel kann das mobile Gerät 6 den Weg 8 auf einem Gebäudeplan eingezeichnet graphisch darstellen. Zusätzlich dazu kann es den momentanen Standort entlang des Wegs 8 auf dem Gebäudeplan graphisch darstellen. Das mobile Gerät 6 kann eine entsprechende Sprachmitteilung erzeugen, um diese Information der Person 8 mitzuteilen, vor allem wenn ihre Sehfähigkeit stark eingeschränkt ist.

Mit Kenntnis des Standorts des Beacons und somit des mobilen Geräts 6, ermittelt in einem Schritt S3 die Wegeleitungs-App denjenigen Beacon, der als nächster auf dem Weg 8 liegt. Die Wegeleitungs-App erzeugt in einem Schritt S4 einen Steuerbefehl, der diesen Beacon veranlasst, ein akustisches Signal zu erzeugen, beispielsweise mittels eines Summers. Die Art des Signals kann durch die Person 2 mittels der Wegeleitungs-App festgelegt werden, so dass die Person 2 "ihr" Signal erkennt, auch wenn mehrere Signale in ihrer Umgebung für andere Wegeleitungszwecke erzeugt werden. Die Person 2 hört dieses akustische Signal und kann in Richtung des das akustische Signal erzeugenden Beacons gehen. Dieser Vorgang wiederholt sich entlang des Wegs 8 an jedem auf dem Weg 8 liegenden Beacon, bis die Person 2 ihren Zielort erreicht.

In einem Ausführungsbeispiel kann das akustische Signal auch ein Warnsignal oder eine Sprachmitteilung umfassen, beispielsweise um auf ein Hindernis hinzuweisen. Die Sprachmitteilung kann u. U. auch auf die Art des Hindernisses hinweisen. Wie oben erwähnt, kann ein Hindernis permanent oder temporär sein.

Wie an anderer Stelle dieser Beschreibung detailliert ausgeführt ist, orientiert sich in einem Ausführungsbeispiel die Person 2 mit der hier beschriebenen Technologie mit Hilfe der Beacons, die ein akustisches Signal erzeugen. Der Fachmann erkennt jedoch, dass der Person 2 trotzdem auch durch das mobile Gerät 6 Information zur Wegeleitung übermittelt werden kann. Je nach Grad einer bestehenden Sehschwäche der Person 2 kann diese Information auf dem Display 30 angezeigt werden, z. B. als Text, graphische Symbole (z. B. Pfeile), Karten und/oder Bilder von Orten, mittels Sprache oder einem anderen Mechanismus, beispielsweise durch ein Vibrieren des mobilen Geräts 6, mitgeteilt werden. Die Wegeleitungsinformation informiert bzw. instruiert die Person 2 beispielsweise wohin sie als nächstes gehen soll und/oder wie gross die Distanz zu einem nächsten Wegpunkt ist. Wenn ein Aufzug 10 zu nutzen ist, kann der Person 2 beispielsweise auch mitgeteilt werden, welcher Aufzug 10 zu benutzen ist, wann er auf einem bestimmten Stockwerk ankommt und/oder wie lange die Wartezeit bis zur Ankunft einer Aufzugkabine ist. Der Fachmann erkennt auch, dass die Wegeleitungsinformation der Person 2 auch mittels sogenannter Smartwatches oder anderen Wearables (z. B. Brillen mit Display und Lautsprecher, evtl. in Verbindung mit Technologie, die die Funktion der erweiterten Realität (augmented reality) ermöglicht) übermittelt werden können.

## Patentansprüche

1. Verfahren zur Wegeleitung einer Person (2) in einem Gebiet (1), in dem eine Vielzahl von Signalgebern (4, 4A) an festgelegten Standorten angeordnet ist, umfassend:
Bestimmen einer momentanen Position eines von der Person (2) mitgeführten mobilen Geräts (6) im Gebiet (1);
Ermitteln eines Signalgebers (4, 4A), der von der momentanen Position ausgehend als nächster von der Person (2) erreicht werden soll; und
Senden eines Steuerbefehls an den ermittelten Signalgeber (4, 4A), wobei der Steuerbefehl den ermittelten Signalgeber (4, 4A) veranlasst, ein für die Person (2) wahrnehmbares Signal zu erzeugen.

2. Verfahren nach Anspruch 1, bei dem die momentane Position bestimmt wird, wenn das mobile Gerät (6) von einem ersten Signalgeber (4, 4A) Daten empfängt, wobei die Daten, die in einem Datensatz einer Datenbank zusammen mit einem Standort des ersten Signalgebers (4, 4A) gespeichert sind, verwendet werden, um den Standort des ersten Signalgebers (4, 4A) aus dem Datensatz zu erhalten.

3. Verfahren nach Anspruch 2, bei dem das Ermitteln des Signalgebers (4, 4A), der von der momentanen Position ausgehend als nächster von der Person (2) erreicht werden soll, von dem mobilen Gerät (6) ausgeführt wird.

4. Verfahren nach Anspruch 3, bei dem das Senden des Steuerbefehls an den ermittelten Signalgeber (4, 4A) von dem mobilen Gerät (6) ausgeführt wird.

5. Verfahren nach Anspruch 1, bei dem die momentane Position durch ein Positionsbestimmungssystem, insbesondere ein globales Positionsbestimmungssystem oder ein Positionsbestimmungssystem für Gebäude, bestimmt wird.

6. Verfahren nach Anspruch 1, bei dem die momentane Position bestimmt wird, wenn ein erster Signalgeber (4, 4A) vom mobilen Gerät (6) Daten empfängt, wobei die momentane Position mit dem festgelegten Standort des ersten Signalgebers (4, 4A) gleichgesetzt wird.

7. Verfahren nach Anspruch 6, bei dem das Ermitteln des Signalgebers (4, 4A), der von der momentanen Position ausgehend als nächster von der Person (2) erreicht werden soll, von einer Steuereinrichtung (17) ausgeführt wird.

8. Verfahren nach Anspruch 7, bei dem das Senden des Steuerbefehls an den ermittelten Signalgeber (4, 4A) von der Steuereinrichtung (17) ausgeführt wird.

9. Verfahren nach einem der vorhergehenden Ansprüche, ausserdem aufweisend:
basierend auf der momentanen Position, Erzeugen von mindestens einem Zielvorschlag, wobei der mindestens eine Zielvorschlag von der momentanen Position ausgehend über einen Weg (8) erreichbar ist,
Übermitteln des mindestens einen Zielvorschlags an die Person (2) unter Verwendung des mobilen Geräts (6),
nach Auswahl des Zielorts durch die Person (2), Ermitteln eines Signalgebers (4, 4A), der am Zielort angeordnet ist, und
Senden des Steuerbefehls an den am Zielort angeordneten Signalgeber (4, 4A), um dort durch den Signalgeber (4, 4A) das für die Person (2) wahrnehmbare Signal zu erzeugen.

10. Verfahren nach einem der vorhergehenden Ansprüche, bei dem die Signalgeber (4, 4A) und das mobile Gerät (6) mit Bluetooth Technologie ausgestatten sind und mittels dieser Technologie miteinander kommunizieren.

11. Verfahren nach einem der vorhergehenden Ansprüche, bei dem das erzeugte Signal ein akustisches Signal ist.

12. System zur Wegeleitung einer Person (2) in einem Gebiet (1), umfassend:
ein mobiles Gerät (6), das von der Person (2) mitführbar ist;
eine Vielzahl von Signalgebern (4, 4A), die an festgelegten Standorten im Gebiet (1) angeordnet ist, und
einen Prozessor (17, 36) mit einem im Prozessor (17, 36) ausführbaren Softwareprogram zur Wegeleitung, wobei der Prozessor im Betrieb
eine momentane Position des mobilen Geräts (6) im Gebiet (1) bestimmt;
einen Signalgeber (4, 4A) ermittelt, der von der momentanen Position ausgehend als nächster von der Person (2) erreicht werden soll; und
einen Steuerbefehl an den ermittelten Signalgeber (4, 4A) sendet, wobei der Steuerbefehl den ermittelten Signalgeber (4, 4A) veranlasst, ein für die Person (2) wahrnehmbares Signal zu erzeugen.

13. System nach Anspruch 12, bei dem der Prozessor (36) im mobilen Gerät (6) angeordnet und dazu ausgestattet ist, um von einem ersten Signalgeber (4, 4A) Daten zu empfangen, wobei die Daten in einem Datensatz einer Datenbank zusammen mit einem Standort des ersten Signalgebers (4, 4A) gespeichert sind, und wobei die Daten verwendbar sind, um den Standort des ersten Signalgebers (4, 4A) aus dem Datensatz zu erhalten.

14. System nach Anspruch 12, bei dem das mobile Gerät (6) mit einer Einrichtung zur Positionsbestimmungssystem, insbesondere für ein globales Positionsbestimmungssystem oder ein Positionsbestimmungssystem für Gebäude, ausgestattet ist, um die momentane Position zu bestimmen.

15. System nach einem der Ansprüche 12 oder 14, bei dem der Prozessor in einer Steuereinrichtung (17) angeordnet ist.

16. System nach einem der Ansprüche 12-15, bei dem die Signalgeber (4, 4A) mit Bluetooth Technologie ausgestatten sind.

17. System nach einem der Ansprüche 12-16, bei dem jeder Signalgeber (4, 4A) adressierbar ist.
